# EUROPÄISCHE PATENTSCHRIFT

(11) **EP 1 637 789 B1**
(45) Veröffentlichungstag und Bekanntmachung des Hinweises auf die Patenterteilung: **06.12.2006**
(21) Anmeldenummer: 05019955.3
(22) Anmeldetag: 14.09.2005
(51) Int. Cl.: F16L 27/093, G05D 16/00

(54) **Druckregler mit Manometer**
Pressure regulator for fluid with manometer
Régulateur de pression pour fluide avec manomètre

(30) Priorität: 20.09.2004 DE 102004046547
(43) Veröffentlichungstag der Anmeldung: 22.03.2006
(73) Patentinhaber: FESTO AG & Co, 73734 Esslingen (DE)
(72) Erfinder: Bogdanowicz, Grzegorz, 73760 Ostfildern (DE); Decker, Andreas, 70825 Korntal (DE)
(74) Vertreter: Abel, Martin

(56) Entgegenhaltungen:
- DE-A1- 3 416 109
- DE-A1- 10 259 395
- "Ventile Serie 2005/2012" November 2002 (2002-11), NUMATICS , XP002358371 * Seite V78 *

## Beschreibung

Die Erfindung betrifft ein fluidtechnisches Gerät, ausgestattet mit mindestens einem eine Längsachse und eine dazu rechtwinkelige Hochachse aufweisenden Druckregler, dessen Reglergehäuse stirnseitig mit einem Manometer bestückt ist, das den über einen Abgriffskanal aus dem Reglergehäuse abgegriffenen Sekundärdruck anzeigt und das bezüglich des Reglergehäuses in unterschiedlichen Ausrichtungen positionierbar ist, um die Ablesbarkeit seiner Anzeigefläche aus unterschiedlichen Blickrichtungen zu gewährleisten.

Ein fluidtechnisches Gerät dieser Art geht aus dem "Pneumatik-Katalog-D-11/02; Ventile; Serie 2005/2012", Seiten V-77 bis V-79, der Firma Numatics hervor. Es handelt sich bei dem dortigen Gerät um ein Ventilgerät, bei dem eine Grundplatte mit mehreren in einer Aufreihungsrichtung Seite an Seite angeordneten Mehrwegeventilen bestückt ist, wobei einige Mehrwegeventile auf einer Zwischenplatte sitzen, an die an einer oder beiden Stirnseiten ein Druckregler angebaut ist, mit dem sich der Druck der zum oder vom Mehrwegeventil strömenden Druckluft auf einen gewünschten Sekundärdruck herunterregeln lässt. Der eingestellte Sekundärdruck kann an einem stirnseitig am betreffenden Reglergehäuse angeordneten Manometer abgelesen werden. Um unterschiedlichen Einbausituationen des fluidtechnischen Gerätes Rechnung tragen zu können, kann das Manometer alternativ in zwei unterschiedlichen Ausrichtungen installiert werden, wobei seine Anzeigefläche entweder in Richtung der Längsachse des Druckreglers oder in Richtung der Hochachse des Druckreglers weist. In der einen Ausrichtung wird das Manometer direkt am Reglergehäuse installiert. Zum Erhalt der anderen Ausrichtung wird zwischen das Manometer und das Reglergehäuse ein um 90° abgebogenes Winkelanschlussstück eingebaut. Diese Umrüstmaßnahmen sind relativ zeitraubend und können überdies nur im stillgesetzten Zustand des fluidtechnischen Gerätes vorgenommen werden.

Aus der US 4 823 835 geht ein Schwenkverbinder hervor, der einen mit einem Ventil ausgestatteten, einen Fluidauslass aufweisenden Grundkörper und ein an dem Grundkörper um dessen Längsachse verschwenkbar gelagertes Schwenkteil aufweist, wobei das Schwenkteil seinerseits einen einen Fluideinlass aufweisenden verschwenkbaren Anschlußkörper trägt. Stirnseitig an dem Schwenkteil kann zusätzlich ein Manometer befestigt werden. Das Manometer steht mit einem Kanal des Schwenkteils in Verbindung, der unabhängig von der Schwenkposition des Schwenkteils ständig mit einem Kanal des Grundkörpers verbunden ist.

Die DE 102 59 395 A1 beschreibt ein Anschlußstück für Fluidleitungen mit einem an einem Grundkörper um dessen Längsachse verschwenkbar gelagerten Schwenkteil. Ein in dem Schwenkteil verlaufender Kanal steht unabhängig von der Schwenkposition ständig mit einem Kanal des Grundkörpers in Verbindung.

Aus der US 5 713 609 geht eine zur Herstellung einer fluidischen Verbindung dienende Kupplungseinrichtung hervor. Sie enthält zwei Kupplungsteile, die drehbar aneinander gelagert sind und jeweils einen Fluidanschluß aufweisen. Die Fluidanschlüsse sind unabhängig von der relativen Drehposition der Kupplungsteile über Kanäle und eine Ringnut ständig miteinander verbunden.

Es ist die Aufgabe der vorliegenden Erfindung, ein fluidtechnisches Gerät der eingangs genannten Art zu schaffen, dessen Druckregler sich einfacher und schneller hinsichtlich unterschiedlicher Einbausituationen des fluidtechnischen Gerätes umrüsten lässt.

Zur Lösung dieser Aufgabe ist der betreffende Druckregler mit einem das Manometer tragenden Manometerhalter ausgestattet, der ohne Unterbrechung des Abgriffkanals relativ zum Reglergehäuse um eine zur Längsachse und zur Hochachse des Druckreglers rechtwinkelige Drehachse in verschiedene Anzeigepositionen verschwenkbar ist.

Auf diese Weise kann die Ausrichtung des Manometers ohne Verwendung zusätzlicher Bauteile und ohne Betriebsunterbrechung des Gerätes durch einfaches Verschwenken des mit dem Manometer bestückten Manometerhalters variiert werden. Wird ein entsprechender Schwenkwinkel bereitgestellt, kann das Manometer beispielsweise wahlweise horizontal oder vertikal ausgerichtet werden, um ein Ablesen der Manometerwerte beispielsweise von vorne oder von oben zu ermöglichen. Sind innerhalb des fluidtechnischen Gerätes mehrere mit Manometer versehene Druckregler nebeneinanderliegend angeordnet, deren Baubreite geringer ist als der Durchmesser des Manometers, kann überdies die Möglichkeit geschaffen werden, benachbarte Manometerhalter in schwenkwinkelmäßig voneinander abweichenden Anzeigepositionen zu positionieren, sodass die Manometer nicht miteinander kollidieren, gleichwohl jedoch die Ausrichtungen nur wenig divergieren und somit trotz der unterschiedlichen Winkellagen beispielsweise die Möglichkeit bestehen kann, eine Ablesung sämtlicher Manometer, je nach Ausrichtung, von vorne oder von oben vorzunehmen. Um eine gegenseitige Kollision benachbarter Manometer auszuschließen, können deren Manometerhalter bei Bedarf auch unterschiedlich lang ausgeführt sein, sodass sich die Abstände zwischen Manometer und Drehachse bei benachbarten Druckreglern um ein Maß voneinander unterscheiden können, das beim Verschwenken eine gegenseitige Behinderung ausschließt.

Vorteilhafte Weiterbildungen der Erfindung gehen aus den Unteransprüchen hervor.

Es ist von Vorteil, wenn der Manometerhalter des jeweiligen Druckreglers wahlweise wenigstens in einer ersten und einer zweiten Haupt-Anzeigeposition positionierbar ist, wobei die Anzeigefläche des Manometers in der ersten Haupt-Anzeigeposition in Richtung der Hochachse und in der zweiten Haupt-Anzeigeposition in Richtung der Längsachse weist.

Es ist eine dahingehende Ausgestaltung möglich, dass zwischen den Haupt-Anzeigepositionen stufenlos oder abgestuft mehrere Zwischen-Anzeigepositionen eingestellt werden können. Zumindest wenn eine stufenweise Positionierung vorgesehen ist, ist es beispielsweise möglich, eine Positionierbarkeit in wahlweise vier jeweils um 30° gegeneinander verschwenkten Anzeigepositionen zu ermöglichen. Besonders zweckmäßig wäre auch eine Positionierbarkeit in drei jeweils um 45° gegeneinander versetzten Anzeigepositionen, wobei die mittlere Anzeigeposition vorzugsweise winkelmittig zwischen den beiden Hauptanzeigepositionen liegt.

Die Schwenklagerung des Manometerhalters wird vorzugsweise über einen zylindrischen Lagerabschnitt des Manometerhalters realisiert, der in einer daran angepassten Lageraufnahme des Reglergehäuses drehbar gelagert ist.

Das Manometer kann an einem quer und insbesondere rechtwinkelig zur Drehachse vom Lagerabschnitt wegragenden Tragarm des Manometerhalters sitzen, wobei die Anzeigefläche insbesondere in Richtung der Längsachse des Tragarmes weist. Die Lageraufnahme kann dabei von zwei zueinander beabstandeten Lageraugen des Reglergehäuses gebildet sein, zwischen denen der Tragarm hindurchgreift und in die der Lagerabschnitt mit axial beidseits des Tragarmes liegenden Lagerfortsätzen verdrehbar eintaucht. Wenigstens ein Lagerauge verfügt umfangsseitig über eine Montagedurchbrechung, die bei entsprechender Schwenkposition des Manometerhalters einen Durchtritt des Tragarmes zum Zwecke dessen Montage oder Demontage zulässt. In der Montagedurchbrechung ist zweckmäßigerweise ein Verschlusskörper lösbar fixiert.

Um eine stufenweise Positionierung des Manometerhalters zu ermöglichen, können Rastmittel vorgesehen sein, die eine verrastende Fixierung des Manometerhalters bezüglich des Reglergehäuses in der jeweils gewünschten Anzeigeposition zulassen. Beispielsweise kann der Lagerabschnitt am Außenumfang einen Zahnkranz aufweisen, in den ein am Reglergehäuse fixiertes federndes Rastelement eingreift.

Die Erfindung ist bei allen fluidtechnischen Geräten mit Vorteil einsetzbar, die über mindestens einen Druckregler verfügen. Besonders empfehlenswert erweist sich die Erfindung in Verbindung mit einem Ventilgerät, das zusätzlich zu einem oder mehreren Druckreglern auch noch ein oder mehrere Mehrwegeventile aufweist.

Nachfolgend wird die Erfindung anhand der beiliegenden Zeichnung näher erläutert. In dieser zeigen:
- Fig. 1: eine bevorzugte Bauform des erfindungsgemäßen fluidtechnischen Gerätes in einer Ausgestaltung als Ventilgerät, wobei der besseren Übersichtlichkeit wegen nur eine von mehreren längsseits nebeneinander angeordneten Steuereinheiten ge- zeigt ist, die unter anderem ein Mehrwegeventil und wenigstens einen Druckregler beinhaltet,
- Fig. 2: einen Ausschnitt des Gerätes aus Fig. 1, wobei die auf der gleichen Seite platzierten Druckregler mehrerer benachbarter Steuereinheiten mit unterschiedlich positionierten Manometern sichtbar sind,
- Fig. 3: die Anordnung aus Fig. 2 in einer Vorderansicht mit Blickrichtung gemäß Pfeil III,
- Fig. 4: einen Längsschnitt durch eine Steuereinheit im Bereich des Druckreglers gemäß Schnittlinie IV-IV aus Fig. 2 und 5,
- Fig. 5: einen Schnitt durch die Anordnung aus Fig. 4 im Bereich eines Manometers und des diesen tragenden Manometerhalters, gemäß Schnittlinie V-V aus Fig. 4,
- Fig. 6: eine vergrößerte Detailansicht des stirnseitigen Endbereiches eines Druckreglers mit Blickrichtung gemäß Pfeil VI von unten her und
- Fig. 7: einen für Fernabfrage modifizierten Druckregler in einer Seitenansicht in Einzeldarstellung.

Bei dem in der Zeichnung abgebildeten fluidtechnischen Gerät 1 handelt es sich um ein Ventilgerät, in dem mehrere Mehrwegeventile 2 unter Einbeziehung weiterer Komponenten zu einer Baugruppe zusammengefasst sind. Das Gerät 1 wird mit Druckluft betrieben, wenngleich prinzipiell auch eine hydraulische Betriebsart in Frage kommt.

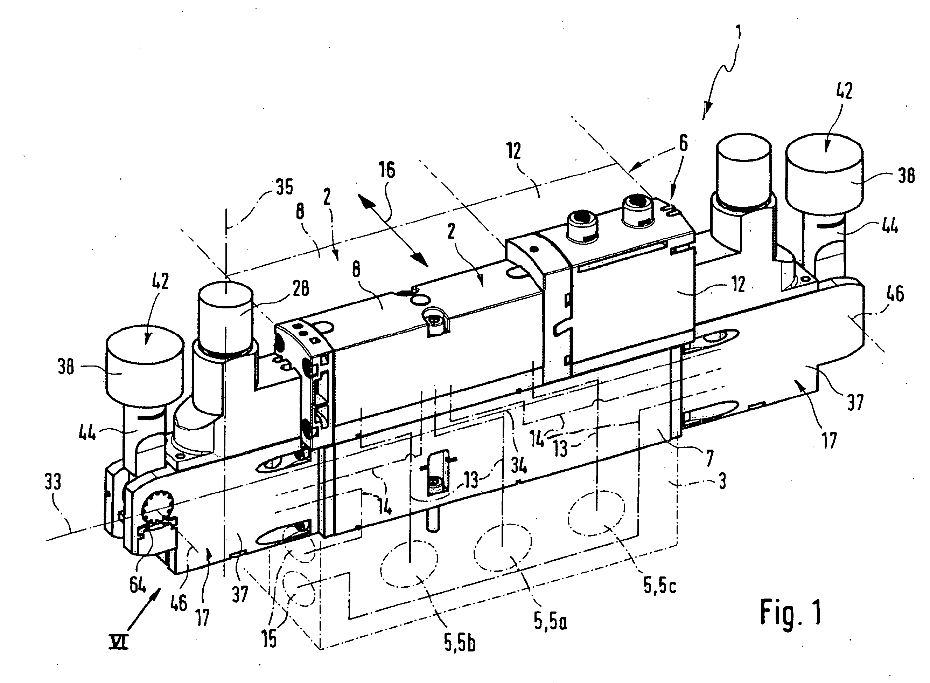

Das Gerät 1 verfügt über eine einstückige oder, wie beim Ausführungsbeispiel, modular aufgebaute Grundplatte 3, die in Fig. 1 strichpunktiert angedeutet ist und die in Richtung ihrer Längsachse 4 von mehreren Zentralkanälen 5 durchsetzt ist. Die Zentralkanäle 5 sind beim Ausführungsbeispiel ein Speisekanal 5a, über den das zu steuernde Druckmedium eingespeist wird, sowie zwei Entlüftungskanäle 5b, 5c, über die die von den Verbrauchern zurückströmende Druckluft abgeführt wird.

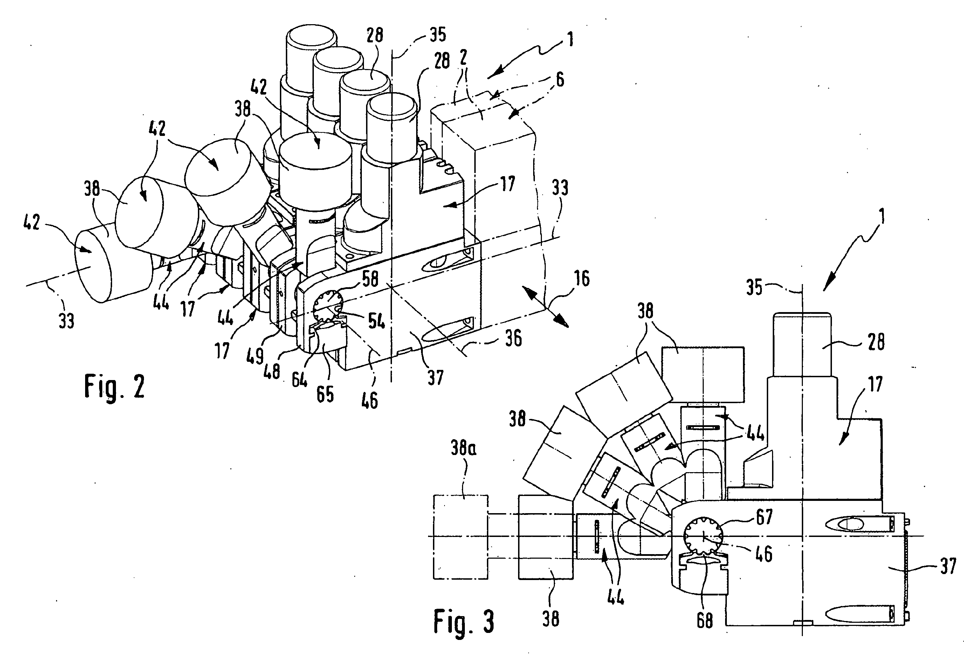

Auf der Grundplatte 3 befinden sich mehrere Bestückungsplätze, die jeweils mit einer Steuereinheit 6 bestückt sind, von denen in Fig. 1 nur eine dargestellt ist. Die Fig. 2 zeigt die stirnseitigen Endabschnitte von vieren der auf der Grundplatte 3 platzierten Steuereinheiten 6.

Jede Steuereinheit 6 verfügt über eine direkt auf der Grundplatte 3 sitzende Zwischenplatte 7 länglicher Gestalt, auf der ein elektrisch aktivierbares Mehrwegeventil 2 befestigt ist. Das Mehrwegeventil 2 hat einen in konventioneller Weise mit einem nicht näher dargestellten Ventilschieber ausgestatteten Steuerteil 8 und einen daran angeordneten elektrischen Antriebsteil 12, beispielsweise in Gestalt eines oder mehrerer Magnetventile.

Von den Zentralkanälen 5 ausgehende Zweigkahäle 13 durchsetzen die Grundplatte 3 und die daran sitzende Zwischenplatte 7 und stehen mit dem auf der Zwischenplatte 7 sitzenden Steuerteil 8 in fluidischer Verbindung. In ähnlicher Weise sind jeder Steuereinheit 6 zwei Arbeitskanäle 14 zugeordnet, die ausgehend vom Steuerteil 8 die Zwischenplatte 7 durchsetzen und anschließend in der Grundplatte 3 verlaufen, bis sie dort über Anschlussöffnungen 15 ausmünden, an denen ein zu betätigender Verbraucher, beispielsweise ein durch Fluidkraft aktivierbarer Antrieb, anschließbar ist. Die diversen Kanäle sind in Fig. 1 lediglich schematisch angedeutet.

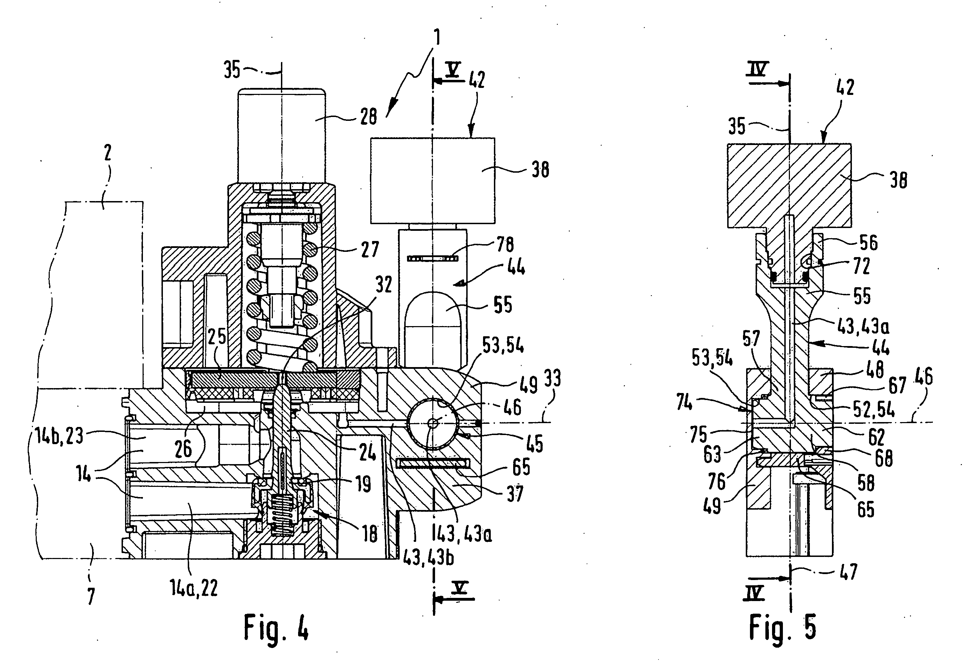

Die Steuereinheiten 6 und mithin auch die Mehrwegeventile 2 und die diesen zugeordneten Zwischenplatten 7 sind in einer durch einen Doppelpfeil 16 angedeuteten Aufreihungsrichtung längsseits nebeneinanderliegend aufeinanderfolgend angeordnet. Die Längsachsen der Mehrwegeventile 2 und der Zwischenplatten 7 sind rechtwinkelig zu der Aufreihungsrichtung 16 ausgerichtet, wobei an jeder der beiden in Richtung der zugeordneten Längsachse orientierten Stirnseiten der Zwischenplatte 7 ein Druckregler 17 angebaut ist. Jeder Druckregler 17 ist, schaltungstechnisch gesehen, in den Verlauf eines der beiden Arbeitskanäle 14 eingeschaltet, wobei aus Fig. 4 die allgemein mit Bezugsziffer 18 bezeichneten vorgeschalteten und nachgeschalteten Arbeitskanalabschnitte 14a, 14b ersichtlich sind.

Über die Druckregler einer jeweiligen Steuereinheit 6 kann somit beim Ausführungsbeispiel der an den beiden Anschlussöffnungen 15 abgreifbare Arbeitsdruck individuell eingestellt werden.

Mit den Druckreglern 17 können auch andere Regelungsaufgaben übernommen werden, insbesondere in Verbindung mit dem Anschluss an andere der die Zwischenplatte 7 durchsetzenden Kanäle. Beispielsweise wäre eine Einschaltung in den vom Speisekanal 5a kommenden Zweigkanal 13 denkbar, um den dem Mehrwegeventil 2 der betreffenden Steuereinheit 6 zugeführten Speisedruck individuell einzustellen. Ist lediglich der Druck eines die Zwischenplatte 7 durchsetzenden Fluidkanals zu regeln, kann auf einen der beiden Druckregler 17 verzichtet werden, sodass lediglich eine Stirnseite der Zwischenplatte 7 mit einem Druckregler 17 bestückt ist.

Der interne Aufbau des Druckreglers 17 und die Funktionsweise seiner Druckregelmittel 18 kann dem Stand der Technik von Druckreglern entsprechen und bedarf daher an dieser Stelle keiner detaillierten Erläuterungen. Zusammengefasst kann festgehalten werden, dass die Druckregelmittel 18 ein axial bewegliches Ventilglied 19 enthalten, das in die Verbindung zwischen einem Primärkanal 22 und einem Sekundärkanal 23 eingeschaltet ist und das einen Betätigungsstößel 24 aufweist, der mit einem Betätigungskolben 25 zusammenwirkt, welcher eine ständig mit dem Sekundärkanal 23 verbundene Steuerkammer 26 begrenzt. Dadurch steht der Betätigungskolben 25 ständig unter dem im Sekundärkanal 23 herrschenden Sekundärdruck. Beim Ausführungsbeispiel sind Primärkanal 22 und Sekundärkanal 23 von zwei aufeinanderfolgenden Ästen eines Arbeitskanals 14 gebildet. Anstelle des Betätigungskolbens 25 kann auch eine Betätigungsmembran vorgesehen sein.

Eine Federeinrichtung 27 beaufschlagt den Betätigungskolben 25 in entgegengesetzter Richtung. Mittels eines Einstellknopfes 28 kann die Stellkraft der Federeinrichtung 27 anwendungsspezifisch variabel eingestellt werden.

Solange der Sekundärdruck den gewünschten Wert noch nicht erreicht hat, drückt die Federeinrichtung 27 den Betätigungsstößel 24 über den zwischengeschalteten Betätigungskolben 25 in die in Fig. 1 nach unten verlagerte Offenstellung, sodass Druckmedium ungehindert vom Primärkanal 22 in den Sekundärkanal 23 überströmen kann. Hat sich im Sekundärkanal 23 der gewünschte Druck aufgebaut, verlagert der dementsprechend in der Steuerkammer 26 herrschende Sekundärdruck den Betätigungskolben 25 entgegen der Federeinrichtung 27 nach oben, sodass auch der Betätigungsstößel 24 in die Schließstellung verlagert wird und ein Nachströmen von Druckmedium aus dem Primärkanal 22 in den Sekundärkanal 23 verhindert.

Der Druckregler 17 des Ausführungsbeispiels ist mit sogenannten Sekundärentlüftungsmaßnahmen ausgestattet. Steigt der Druck im Sekundärkanal 23 über das gewünschte Maß an, hebt den Betätigungskolben 25 von dem nicht weiter nachfolgenden Betätigungsstößel 24 ab, sodass eine Entlüftungsöffnung 32 freigegeben wird, über die Druckmedium aus der Steuerkammer 26 zur Atmosphäre abströmen kann.

Der Druckregler 17 besitzt eine Längsachse 33, die parallel zur Längsachse 34 der Zwischenplatte 7 verläuft und zweckmäßigerweise rechtwinkelig zu der Aufreihungsrichtung 16 ausgerichtet ist. Außerdem besitzt der Druckregler 17 eine zu der Längsachse 33 rechtwinkelige Hochachse 35, die zweckmäßigerweise zugleich auch rechtwinkelig zu der Aufreihungsrichtung 16 ausgerichtet ist. Die Aufreihungsrichtung 16 ist mit der Querachse 36 des Druckreglers 17 gleichgerichtet.

Der Einstellknopf 28 befindet sich zweckmäßigerweise an der Oberseite des Druckreglers 17. Seine Drehachse ist mit der Hochachse 35 gleichgerichtet.

An seiner der Zwischenplatte 7 in Richtung der Längsachse 33 entgegengesetzten Stirnseite ist das die oben geschilderten Druckregelmittel 18 enthaltende Reglergehäuse 37 mit einem Manometer 38 bestückt. Dieses zeigt an einer Anzeigefläche 42, an der sich beispielsweise eine Skala und ein Zeiger befinden, den im Sekundärkanal 23 herrschenden Sekundärdruck an. Dieser wird über einen Abgriffskanal 43 abgegriffen, der das Manometer 38 mit der Steuerkammer 26, oder bei Bedarf auch direkt mit dem Sekundärkanal 23, verbindet.

Das Manometer 38 sitzt nicht direkt am Reglergehäuse 37, sondern an einem separaten Manometerhalter 44, der an einer Drehlagerstelle 45 relativ zum Reglergehäuse 37 verschwenkbar gelagert ist. Die Drehachse 46 verläuft rechtwinkelig zur Längsachse 33 und Hochachse 35 des Reglergehäuses 37, wobei das Manometer 38 zweckmäßigerweise so am Manometerhalter 44 angeordnet ist, dass die Anzeigefläche 42 rechtwinkelig von der Drehachse 46 wegweist.

Durch die drehbare Lagerung kann der Manometerhalter 44 in der durch die Längsachse 33 und die Hochachse 35 aufgespannten oder einer dazu parallelen Schwenkebene 47 verschwenkt werden und lässt sich so in verschiedenen Anzeigepositionen positionieren, die sich dadurch auszeichnen, dass die Anzeigefläche 42 unterschiedliche Ausrichtungen einnimmt.

Zur Verdeutlichung der variablen Positionierbarkeit des Manometers 38 sind bei der Anordnung gemäß Fig. 2 die Manometerhalter 44 der dort abgebildeten vier Druckregler 17 in unterschiedlichen Anzeigepositionen mit dementsprechend unterschiedlichen Schwenkwinkeln bezüglich des Reglergehäuses 37 gezeigt. Der Manometerhalter 44 des im Vordergrund abgebildeten Druckreglers 17 nimmt eine erste Haupt-Anzeigeposition ein, in der seine Anzeigefläche 42 in Richtung der Hochachse 35 weist, also mit dieser gleichgerichtet orientiert ist. Der Manometerhalter 44 des ganz im Hintergrund angeordneten Druckreglers 17 ist in eine zweite Haupt-Anzeigeposition verschwenkt, in der die Anzeigefläche 42 in Richtung der Längsachse 33 weist, also gleich wie diese orientiert ist. Die beiden dazwischenliegenden Manometerhalter 44 nehmen jeweils eine zwischen den beiden Haupt-Anzeigepositionen liegende Zwischen-Anzeigeposition ein, allerdings mit voneinander abweichenden Ausrichtungen. Beim Ausführungsbeispiel der Fig. 2 sind die vier Anzeigepositionen um jeweils 30° gegeneinander versetzt bzw. verschwenkt.

Möglich wäre beispielsweise auch eine Positionierbarkeit in wahlweise drei Anzeigepositionen. Hierbei sind dann zweckmäßigerweise zwei Anzeigepositionen von den beiden um 90° gegeneinander verschenkten Haupt-Anzeigepositionen gebildet, während die dritte Anzeigeposition winkelmäßig dazwischen liegt, mit einem Winkelabstand von 45° zu jeder der Haupt-Anzeigepositionen.

Ersichtlich besteht durch die Schwenkbarkeit des Manometerhalters 44 die Möglichkeit, das daran fixierte Manometer 38 variabel so zu positionieren, dass beim jeweiligen Anwendungsfall die Ablesbarkeit der Anzeigefläche 42 aus der spezifisch gewünschten Blickrichtung gewährleistet ist.

Vielfach ergibt sich die Notwendigkeit einer Installation des fluidtechnischen Gerätes 1 in einer Weise, in der entweder von vorne her, also in Richtung der Längsachse 33, oder von oben her, also in Richtung der Hochachse 35, eine Ablesbarkeit aller Manometer 38 des Gerätes 1 gewährleistet sein soll. Sind die Reglergehäuse 37 nicht schmäler als die Manometer 38, können dann die Manometerhalter 44 sämtlicher vorhandener Druckregler 17 entweder in der ersten oder in der zweiten Haupt-Anzeigeposition positioniert werden.

Vielfach wird allerdings die Breite des Reglergehäuses 37 geringer sein als der Durchmesser des zugeordneten Manometers 38, sodass es nicht möglich ist, benachbarte Manometerhalter 44 mit dem gleichen Schwenkwinkel zu positionieren. In einem solchen Fall besteht allerdings aufgrund der vorhandenen Verschwenkbarkeit die Möglichkeit, benachbarte Manometerhalter 44 in geringfügig winkelmäßig voneinander abweichenden Anzeigepositionen zu platzieren, sodass eine nur leichte Schrägstellung einzelner Anzeigeflächen 42 unter einem geringen spitzen Winkel vorliegt, die die Ablesbarkeit praktisch nicht beeinträchtigt.

Auf diese Weise kann man, wenn eine Ablesbarkeit von oben gewünscht ist, jeden zweiten Manometerhalter 44 in die erste Haupt-Anzeigeposition verbringen, während jeder dazwischen angeordnete Manometerhalter 44 eine diesbezüglich geringfügig verschwenkte Zwischen-Anzeigeposition einnimmt, wie dies in Fig. 2 und 3 bei den von vorne her ersten und zweiten Manometerhaltern 44 der Fall ist. Ist hingegen eine Ablesbarkeit von vorne her gewünscht, ist eine vergleichbare alternierende Anordnung möglich, bei der die Manometerhalter 44 in der Aufreihungsrichtung 16 abwechselnd die zweite Haupt-Anzeigeposition und eine diesbezüglich leicht verschwenkte Zwischen-Anzeigeposition einnehmen. Dies entspricht dann der Anordnung, wie sie in Fig. 2 und 3 bei den hinteren beiden Manometerhaltern vorzufinden ist.

Die Drehachsen 46 sämtlicher Druckregler 17, die identisch orientierten Stirnseiten der Zwischenplatte 7 zugeordnet sind, fallen vorzugsweise zusammen. Die Drehachsen 46 verlaufen im Übrigen bevorzugt parallel zu der Aufreihungsrichtung 16.

Beim Ausführungsbeispiel sind die Manometer 38 bei sämtlichen Druckreglern 17 mit dem gleichen Abstand zur Drehachse 46 am zugeordneten Manometerhalter 44 fixiert. Aufgrund der daraus resultierenden gegenseitigen Beeinträchtigung können benachbarte Manometer 38 nicht mit identischer Ausrichtung positioniert werden. Um diese Beeinträchtigung zu umgehen, können unmittelbar benachbarte Manometer 38 bei Bedarf an unterschiedlich langen Manometerhaltern 44 fixiert werden, sodass sich unterschiedliche Abstände zur Drehachse 46 ergeben, die derart groß gewählt sind, dass die Manometerhalter 44 ohne Kollision der von ihnen getragenen Manometer 38 aneinander vorbei verschwenkt werden können. Eine derartige Ausgestaltung ist in Fig. 3 angedeutet, wo ein Manometer 38a gezeigt ist, das in Verbindung mit einem verlängerten Manometerhalter 44 außerhalb der unmittelbar benachbarten Manometer 38 kollisionsfrei vorbeischwenken kann.

Im Folgenden sei näher auf eine bevorzugte Art der Ausgestaltung und Drehlagerung des Manometerhalters 44 eingegangen.

Im Bereich der Drehlagerstelle 45 verfügt das Reglergehäuse 37 über zwei in Richtung der Querachse 36 zueinander beabstandete Lageraugen 48, 49, die zwei koaxial miteinander fluchtende kreiszylindrische Ausnehmungen aufweisen, die gemeinsam eine Lageraufnahme 54 bilden. Während die eine, erste Ausnehmung 52 das zugeordnete erste Lagerauge 48 durchsetzt, ist die andere, zweite Ausnehmung 53 sacklochartig im zugeordneten zweiten Lagerauge 49 ausgebildet, wobei ihre offene Seite dem ersten Lagerauge 48 zugewandt ist. Die Längsachse der Lageraufnahme 54 fällt mit der Drehachse 46 zusammen.

Der Manometerhalter 44 verfügt über einen Tragarm 55, der rechtwinkelig zu der Drehachse 46 ausgerichtet ist und an seinem äußeren Endabschnitt 56 das Manometer 48 trägt.

Mit seinem inneren Endabschnitt 57 ist der Tragarm 55 an einem im Wesentlichen zylindrischen Lagerabschnitt 58 befestigt, wobei er mit diesem Lagerabschnitt 58 insbesondere einstückig ausgebildet ist und rechtwinkelig von der Längsachse des Lagerabschnittes 58 wegragt.

Der Lagerabschnitt 58 besitzt auf entgegengesetzten Seiten seitlich über den Tragarm 55 vorstehende, zueinander koaxiale zylindrische erste und zweite Lagerfortsätze 63, die in die erste bzw. zweite Ausnehmung 52, 53 von innen her eintauchen, wobei der Tragarm 55 zwischen den beiden Lageraugen 48, 49, mit zur Drehachse 46 bevorzugt rechtwinkeliger Ausrichtung, hindurchgreift.

Um die Montage und Demontage zu ermöglichen, ist das erste Lagerauge 48 umfangsseitig mit einer Montagedurchbrechung 64 versehen, deren in der Umfangsrichtung der ersten Ausnehmung 52 gemessene Breite wenigstens dem Durchmesser des Tragarmes 55 im Bereich des inneren Endabschnittes 57 entspricht. Beim Ausführungsbeispiel befindet sich die Montagedurchbrechung 64 an der Unterseite des ersten Lagerauges 48.

Bei der Montage wird der Manometerhalter 44 mit nach unten ragendem Tragarm 55 von der Seite her mit seinem Lagerabschnitt 58 durch die erste Ausnehmung 52 hindurch eingesteckt, wobei der Tragarm 55 die Montagedurchbrechung 64 durchquert. Wird anschließend der Manometerhalter 44 nach oben geschwenkt, ist die axiale Lage automatisch gesichert, weil der Tragarm 55 zwischen den beiden Lageraugen 48, 49 gefangen ist.

Beim Ausführungsbeispiel ist bei installiertem Manometerhalter 44 in die Montagedurchbrechung 64 ein lösbar, insbesondere durch Verrasten, fixierter Verschlusskörper 65 eingesetzt. Er ragt mit einem Anschlagabschnitt 66 in den Zwischenraum zwischen den beiden Lageraugen 48, 49 hinein und befindet sich mithin im Schwenkweg des Tragarmes 55, sodass er dessen Schwenkwinkel begrenzt. Beispielsweise kann dadurch die zweite Haupt-Anzeigeposition vorgegeben werden. Die erste Haupt-Anzeigeposition kann insbesondere durch ein Auflaufen des Tragarmes 55 auf denjenigen Teil des Reglergehäuses 37 bewirkt werden, der die beiden Lageraugen 48, 49 trägt.

Beim Ausführungsbeispiel sind die einzelnen Anzeigepositionen des Manometerhalters 44 durch Rastmittel abgestuft lösbar fixierbar. Dadurch kann auch bei relativ starken Erschütterungen eine sichere Aufrechterhaltung der jeweils eingestellten Anzeigeposition gewährleistet werden.

Beim Ausführungsbeispiel enthalten die Rastmittel einen am Außenumfang des ersten Lagerfortsatzes 62 angeordneten, bevorzugt ringsumlaufenden Zahnkranz 67 mit radial nach außen orientierten Zähnen. Am zugeordneten ersten Lagerauge 48 ist im Umfangsbereich des Zahnkranzes 67 ein diesbezüglich radial federelastisches Rastelement 68 angeordnet, beispielsweise in Gestalt einer Gegenverzahnung geringeren Umfanges als der Zahnkranz 67.

Beim Ausführungsbeispiel ist das Rastelement 68 ein Bestandteil des Verschlusskörpers 65, sodass kein gesondertes Bauteil erforderlich ist und durch den Einsatz eines multifunktionellen Bauteils eine Einsparung an Herstellkosten möglich ist.

Der Zahnkranz 67 liegt zweckmäßigerweise axial versenkt in der ersten Ausnehmung 52, sodass durch ihn die Baubreite des Reglergehäuses 37 nicht unnötig vergrößert wird.

Der schon erwähnte Abgriffskanal 43 setzt sich beim Ausführungsbeispiel aus einem äußeren und einem inneren Kanalabschnitt 43a, 43b zusammen. Der äußere Kanalabschnitt 43a mündet einenends zu einer am äußeren Endabschnitt 56 des Tragarmes 55 vorgesehenen Schnittstelle 72, an der das Manometer, zweckmäßigerweise im Rahmen einer lösbar verriegelten Steckverbindung, unter Abdichtung am Manometerhalter 44 fixiert ist. Über die Schnittstelle 72 kommuniziert der äußere Kanalabschnitt 43a mit dem im Manometer 38 verlaufenden Messkanal 73.

Der äußere Kanalabschnitt 43a erstreckt sich im Innern des Tragarmes 55 bis in den Lagerabschnitt 58 hinein, wo er rechtwinkelig abknickt, um den zweiten Lagerfortsatz 63, insbesondere koaxial, zu durchsetzen und an dessen Stirnfläche 74 auszumünden, der die Bodenwand 75 der sacklochartigen Ausnehmung 53 des zweiten Lagerauges 49 mit minimalem Abstand gegenüberliegt.

Umfangsseitig mündet einenends der im Reglergehäuse 37 verlaufende innere Kanalabschnitt 43b des Abgriffskanals 43 ein, der andernends mit der Steuerkammer 26 kommuniziert.

Ein den zweiten Lagerfortsatz 63 umschließender Dichtungsring 76 dichtet denjenigen Bereich der zweiten Ausnehmung 53 zur Umgebung hin ab, in den die beiden Kanalabschnitte 43a, 43b einmünden. Somit sind die beiden Kanalabschnitte 43a, 43b unabhängig von der momentanen Anzeigeposition des Manometerhalters 44 fluidisch miteinander verbunden. Diese Verbindung bleibt auch während der Schwenkbewegung bestehen, sodass sich die Ausrichtung des Manometers 38 auch während des Betriebes des Druckreglers 17 ohne Beeinträchtigung des Betriebes verändern lässt.

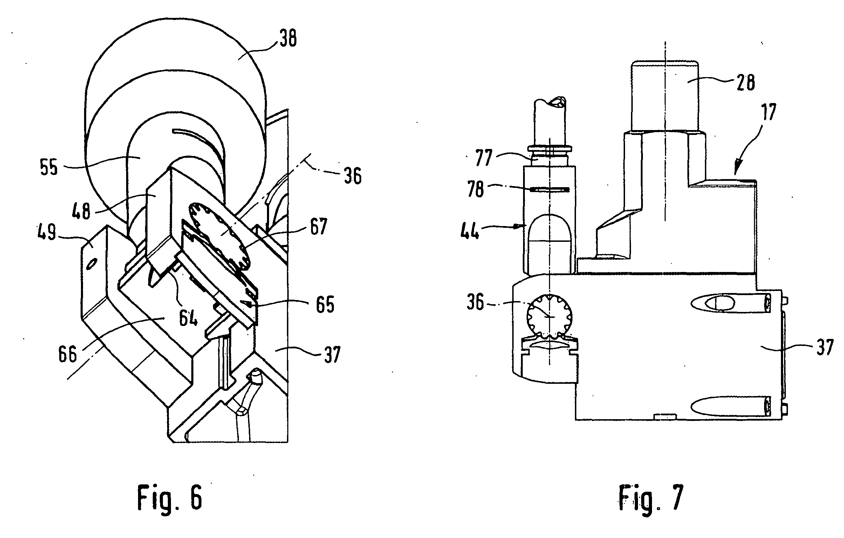

Die Fig. 7 illustriert, dass mindestens ein Druckregler 17 bei Bedarf auch zur Fernanzeige des Sekundärdruckes umrüstbar ist. In diesem Falle wird anstelle des Manometers ein Schlauchanschlussstück 77 am Manometerhalter 44 montiert, an das lösbar ein Druckmittelschlauch anschließbar ist, der zu der Stelle geführt wird, an der eine Druckanzeige gewünscht ist. Dort kann er dann mit dem entfernt vom Druckregler 17 installierten Manometer verbunden werden. Das Schlauchanschlussstück 77 ist so ausgebildet, dass es mit der Schnittstelle 72 des Tragarmes 55 zusammenpasst und in diese unter Abdichtung einsteckbar ist. Die Verriegelung der Steckverbindung kann mittels eines beispielsweise die Form eines U-Bügels aufweisenden Riegelelementes 78 in gleicher Weise gesichert werden, wie dies in Verbindung mit dem eingesteckten Manometer 38 der Fall ist.

Bei Bedarf kann auf Rastmittel zur Fixierung der verschiedenen Anzeigepositionen des Manometerhalters 44 verzichtet werden. Es wäre beispielsweise möglich, die Schwenkbeweglichkeit des Manometerhalters 44 bezüglich des Reglergehäuses 37 mit einer gewissen Schwergängigkeit auszustatten, die stufenlos eine reibschlüssige Fixierung in jeder Schwenkwinkellage ermöglicht. Wenn der Dichtungsring 76 mit entsprechender Vorspannung installiert ist, kann er bereits ausreichen, um die für die Positionierung notwendigen Reibungskräfte aufzubringen.

## Patentansprüche

1. Fluidtechnisches Gerät, ausgestattet mit mindestens einem eine Längsachse (33) und eine dazu rechtwinkelige Hochachse (35) aufweisenden Druckregler (17), dessen Reglergehäuse (37) stirnseitig mit einem Manometer (38) bestückt ist, das den über einen Abgriffskanal (43) aus dem Reglergehäuse (37) abgegriffenen Sekundärdruck anzeigt und das bezüglich des Reglergehäuses (37) in unterschiedlichen Ausrichtungen positionierbar ist, um die Ablesbarkeit seiner Anzeigefläche (42) aus unterschiedlichen Blickrichtungen zu gewährleisten, **gekennzeichnet durch** einen das Manometer (38) tragenden Manometerhalter (44), der ohne Unterbrechung des Abgriffkanals (43) relativ zum Reglergehäuse (37) um eine zur Längsachse (33) und zur Hochachse (35) des Druckreglers (17) rechtwinkelige Drehachse (46) in verschiedene Anzeigepositionen verschwenkbar ist.

2. Gerät nach Anspruch 1, **dadurch gekennzeichnet, dass** der Manometerhalter (44) wahlweise wenigstens in einer ersten und einer zweiten Haupt-Anzeigeposition positionierbar ist, wobei die Anzeigefläche (42) des Manometers (38) in der ersten Haupt-Anzeigeposition in Richtung der Hochachse (35) und in der zweiten Haupt-Anzeigeposition in Richtung der Längsachse (33) weist.

3. Gerät nach Anspruch 2, **dadurch gekennzeichnet, dass** der Manometerhalter (44) alternativ in wenigstens einer zwischen den beiden Haupt-Anzeigepositionen liegenden Zwischen-Anzeigeposition positionierbar ist.

4. Gerät nach einem der Ansprüche 1 bis 3, **dadurch gekennzeichnet, dass** der Manometerhalter (44) in wahlweise drei oder vier um 45° oder 30° gegeneinander versetzten Anzeigepositionen positionierbar ist.

5. Gerät nach einem der Ansprüche 1 bis 4, **dadurch gekennzeichnet, dass** der Manometerhalter (44) mit einem zylindrischen Lagerabschnitt (58) in einer Lageraufnahme (54) des Reglergehäuses (37) drehbar gelagert ist.

6. Gerät nach Anspruch 5, **dadurch gekennzeichnet, dass** das Manometer (38) an einem quer zur Drehachse (46) vom Lagerabschnitt (58) wegragenden Tragarm (55) des Manometerhalters (44) sitzt, wobei die Lageraufnahme (54) von zwei zueinander beabstandeten Lageraugen (48, 49) gebildet ist, zwischen denen der Tragarm (55) hindurchgreift und in die der Lagerabschnitt (58) mit beidseits des Tragarmes (55) liegenden Lagerfortsätzen (62, 63) eintaucht, wobei ein Lagerauge (48) umfangsseitig eine den Durchtritt des Tragarmes (55) ermöglichende Montagedurchbrechung (64) aufweist, in der zweckmäßigerweise ein lösbar fixierter Verschlusskörper (65) angeordnet ist.

7. Gerät nach Anspruch 6, **dadurch gekennzeichnet, dass** der Verschlusskörper (65) mit einem den Schwenkwinkel des Manometerhalters (44) begrenzenden Anschlagabschnitt (66) zwischen die beiden Lageraugen (48, 49) und dort in den Schwenkweg des Tragarmes (55) ragt.

8. Gerät nach einem der Ansprüche 5 bis 7, **dadurch gekennzeichnet, dass** der Abgriffskanal (43) einen äußeren Kanalabschnitt (43a) aufweist, der im Innern des Manometerhalters (44) zwischen der Befestigungsstelle des Manometers (38) und dem Lagerabschnitt (58) verläuft und der am Lagerabschnitt (58) in einen Abschnitt (53) der Lageraufnahme (54) ausmündet, der mit einem zu den Druckregelmitteln (18) führenden inneren Kanalabschnitt (43b) des Abgriffskanals (43) verbunden ist und zur Umgebung hin abgedichtet ist.

9. Gerät nach einem der Ansprüche 1 bis 8, **dadurch gekennzeichnet, dass** Rastmittel (67, 68) zur verrastenden Fixierung des Manometerhalters (44) bezüglich des Reglergehäuses (37) in der jeweiligen Anzeigeposition vorgesehen sind.

10. Gerät nach Anspruch 9 in Verbindung mit einem der Ansprüche 5 bis 8, **dadurch gekennzeichnet, dass** der Lagerabschnitt. (58) am Außenumfang einen Zahnkranz (67) aufweist, in den ein am Reglergehäuse (37) fixiertes federndes Rastelement (68) eingreift.

11. Gerät nach Anspruch 10, **dadurch gekennzeichnet, dass** der Zahnkranz (67) an dem dem Verschlusskörper (65) zugeordneten Lagerfortsatz (62) angeordnet ist, wobei das Rastelement (68) an dem Verschlusskörper (65) vorgesehen ist.

12. Gerät nach einem der Ansprüche 1 bis 11, **dadurch gekennzeichnet, dass** das Manometer (38) im Rahmen einer lösbar verriegelten Steckverbindung am Manometerhalter (44) fixiert ist.

13. Gerät nach einem der Ansprüche 1 bis 12, **gekennzeichnet durch** mehrere in einer Aufreihungsrichtung (16) Seite an Seite aufeinanderfolgend angeordnete Druckregler (17), wobei die Aufreihungsrichtung (16) parallel zu den Drehachsen (46) der Manometerhalter (44) verläuft.

14. Gerät nach Anspruch 13, **gekennzeichnet durch** eine Ausgestaltung als Ventilgerät, die eine einstückige oder modular aufgebaute Grundplatte (3) aufweist, die mit mehreren in der Aufreihungsrichtung (16) aufeinanderfolgend angeordneten Mehrwegeventilen (2) bestückt ist, wobei zwischen wenigstens einem Mehrwegeventil (2) und der Grundplatte (3) eine Zwischenplatte (7) mit Fluidkanälen (13, 14) sitzt, an der an wenigstens einer Stirnseite ein Druckregler (17) angeordnet ist.

15. Gerät nach Anspruch 13 oder 14, **dadurch gekennzeichnet, dass** bei benachbarten Druckreglern (17) die Manometerhalter (44) unterschiedlich lang sind und die Manometer (38) daran mit voneinander abweichendem Abstand zur Drehachse (46) angeordnet sind, derart, dass die Manometerhalter (44) ohne Kollision der von ihnen getragenen Manometer (38) aneinander vorbeischwenkbar sind.

16. Gerät nach einem der Ansprüche 13 bis 15, **dadurch gekennzeichnet, dass** die Manometerhalter (44) unmittelbar benachbarter Druckregler (17) ohne gegenseitige Beeinträchtigung voneinander abweichende Anzeigepositionen einnehmen können.

17. Gerät nach Anspruch 16, **dadurch gekennzeichnet, dass** in der Aufreihungsrichtung (16) aufeinanderfolgende Manometerhalter (44) abwechselnd mit in Richtung der Längsachse (33) und mit in einer dazu spitzwinkeligen Richtung weisenden Anzeigeflächen (42) ihrer Manometer (38) ausgerichtet sind.

18. Gerät nach Anspruch 16, **dadurch gekennzeichnet, dass** in der Aufreihungsrichtung (16) aufeinanderfolgende Manometerhalter (44) abwechselnd mit in Richtung der Hochachse (35) und mit in einer dazu spitzwinkeligen Richtung weisenden Anzeigeflächen (42) ihrer Manometer (38) ausgerichtet sind.

## Claims

1. Fluid power device fitted with at least one pressure regulator (17) having a longitudinal axis (33) and an upright axis (35) perpendicular thereto, the housing (37) of said pressure regulator (17) being fitted with a manometer (38) at an end thereof, said manometer (38) indicating the secondary pressure tapped from the regulator housing (37) via a tapping duct (43) and being able to be positioned with different alignments in relation to the regulator housing (37), in order to ensure readability of its display face (42) from different directions of viewing, **characterised by** a manometer holder (44) bearing the manometer (38), which without interruption of the tapping duct (43) may be pivoted in relation to the regulator housing (37) about an axis of rotation (46) perpendicular to the longitudinal axis (33) and to the upright axis (35) of the pressure regulator (17) into different display positions.

2. Device according to Claim 1, **characterised in that** the manometer holder (44) is able to be selectively positioned at least in a first and in a second principal display position, the display face (42) of the manometer (38) facing in the first principal display position in the direction of the upright axis (35) and in the second principal display position in the direction of the longitudinal axis (33).

3. Device according to Claim 2, **characterised in that** the manometer holder (44) is able to be alternatively positioned in at least one intermediate display position between the two principal display positions.

4. Device according to any one of Claims 1 to 3, **characterised in that** the manometer holder (44) is able to be selectively positioned in three or four display positions offset from each other by 45° or 30°.

5. Device according to any one of Claims 1 to 4, **characterised in that** the manometer holder (44) is rotatably mounted with the aid of a cylindrical bearing section (58) in a bearing socket (54) of the regulator housing (37).

6. Device according to Claim 5, **characterised in that** the manometer (38) is seated on a support arm (55), extending athwart the axis of rotation (46) from the bearing section (58), of the manometer holder (44), the bearing socket (54) being constituted by two spaced apart bearing eyes (48, 49), between which the support arm (55) engages and into which bearing eyes (48, 49) the bearing section (58) fits together with trunnions (62, 63) placed on either side of the support arm (55), one bearing eye (48) peripherally having an assembly hole (64) rendering possible passage of the support arm (55), said assembly hole (64) advantageously having a releaseably secured closure member (65) in it.

7. Device according to Claim 6, **characterised in that** the closure member (65) has an abutment section (66) delimiting the angle of pivot of the manometer holder (44), said abutment section (66) extending between the two bearing eyes (48, 49) and into the path of pivoting of the support arm (55).

8. Device according to any one of Claims 5 to 7, **characterised in that** the tapping duct (43) has an outer duct section (43a) extending in the interior of the manometer holder (44) between the attachment position of the manometer (38) and the bearing section (58) and opening at the bearing section (58) into a section (53) of the bearing socket (54), said section (53) being connected to an inner duct section (43b) of the tapping duct (43), leading to the pressure regulating means (18), and being sealed off from the surroundings.

9. Device according to any one of Claims 1 to 8, **characterised in that** detent means (67, 68) are provided for securing the manometer holder (44) with a detent functionality in relation to the regulator housing (37) in the respective display position.

10. Device according to Claim 9, in conjunction with any one of Claims 5 to 8, **characterised in that** the bearing section (58) has a ring of teeth (67) on an outer periphery thereof for engagement by a resilient detent element (68) secured to the regulator housing (37).

11. Device according to Claim 10, **characterised in that** the ring of teeth (67) is arranged on the trunnion (62) provided for the closure member (65), the detent element (68) being provided on the closure member (65).

12. Device according to any one of Claims 1 to 11, **characterised in that** the manometer (38) is secured to the manometer holder (44) with the use of a releaseably locked plug connection.

13. Device according to any one of Claims 1 to 12, **characterised by** a plurality of pressure regulators (1,7) arranged in a line-up direction (16) side by side in sequence, the line-up direction (16) extending parallel to the axes of rotation (46) of the manometer holder (44).

14. Device according to Claim 13, **characterised by** a design in the form of a valve device, which has an integral or modularly designed base plate (3) fitted with a plurality of multi-way valves (2) placed in sequence in the line-up direction (16), an intermediate plate (7), having fluid ducts (13, 14), being placed between at least one multi-way valve (2) and the base plate (3) and on at least one end side of such an intermediate plate (7) a pressure regulator (17) is arranged.

15. Device according to Claim 13 or 14, **characterised in that** in the case of adjacent pressure regulators (17) the manometer holders (44) are of different length and the manometers (38) are arranged thereon at different distances from the axis of rotation (46) so that the manometer holders (44) are able to be pivoted past each other without the manometers (38) borne by them colliding.

16. Device according to any one of Claims 13 to 15, **characterised in that** the manometer holders (44) of directly adjacent pressure regulators (17) may assume mutually different display positions without mutual interference.

17. Device according to Claim 16, **characterised in that** manometer holders (44), which are placed in sequence in the line-up direction (16), are arranged so that the display faces (42) of their manometers (38) alternatingly face in the direction of the longitudinal axis (33) and in a direction at an acute angle thereto.

18. Device according to Claim 16, **characterised in that** manometer holders (44), which are placed in sequence in the line-up direction (16), are arranged so that the display faces (42) of their manometers (38) alternatingly face in the direction of the upright axis (35) and in a direction at an acute angle thereto.

## Revendications

1. Appareil de technique des fluides, équipé d'au moins un régulateur de pression (17) présentant un axe longitudinal (33) et un axe de hauteur (35) perpendiculaire à lui, régulateur dont le boîtier (37) est équipé côté frontal d'un manomètre (38), qui affiche la pression secondaire captée depuis le boîtier de régulateur (37) par un canal de capture (43) et qui est positionnable dans différentes orientations par rapport au boîtier de régulateur (37) afin de garantir la lisibilité de sa surface d'affichage (42) depuis différentes directions d'observation, **caractérisé par** un support de manomètre (44) portant le manomètre (38), support qui peut pivoter dans différentes positions d'affichage par rapport au boîtier de régulateur (37) autour d'un axe de rotation (46) perpendiculaire à l'axe longitudinal (33) et à l'axe de hauteur (35) du régulateur de pression (17), sans interrompre le canal de capture (43).

2. Appareil selon la revendication 1, **caractérisé en ce que** le support de manomètre (44) est positionnable au choix au moins dans une première et une deuxième positions principales d'affichage, la surface d'affichage (42) du manomètre (38) étant tournée, dans la première position principale d'affichage, dans la direction de l'axe de hauteur (35) et, dans la deuxième position principale d'affichage, dans la direction de l'axe longitudinal (33).

3. Appareil selon la revendication 2, **caractérisé en ce qu'**en variante, le support de manomètre (44) est positionnable dans au moins une position d'affichage intermédiaire située entre les deux positions d'affichage principales.

4. Appareil selon l'une des revendications 1 à 3, **caractérisé en ce que** le support de manomètre (44) est positionnable au choix dans trois ou quatre positions d'affichage mutuellement décalées de 45° ou 30°.

5. Appareil selon l'une des revendications 1 à 4, **caractérisé en ce que** le support de manomètre (44) est monté avec une section de soutien cylindrique (58) dans un logement de soutien (54) du boîtier de régulateur (37).

6. Appareil selon la revendication 5, **caractérisé en ce que** le manomètre (38) repose sur un bras support (55) du support de manomètre (44) sortant de la section de soutien (58) transversalement à l'axe de rotation (46), le logement de soutien (54) étant formé de deux oeillets supports (48, 49) mutuellement espacés, entre lesquels s'engage le bras support (55) et dans lesquels s'enfonce la section de soutien (58) avec des prolongements de soutien (62, 63) situés de chaque côté du bras support (55), un oeillet de soutien (48) présentant sur la circonférence une traversée de montage (64) permettant le passage du bras support (55), traversée dans laquelle est placé de manière avantageuse un corps de fermeture (65) fixé de façon amovible.

7. Appareil selon la revendication 6, **caractérisé en ce que** le corps de fermeture (65) dépasse entre les deux oeillets de soutien (48, 49) avec une section de butée (66) limitant l'angle de pivotement du support de manomètre (44), ainsi que dans la course du pivotement du bras support (55).

8. Appareil selon l'une des revendications 5 à 7, **caractérisé en ce que** le canal de capture (43) présente une section extérieure de canal (43a) qui s'étend à l'intérieur du support de manomètre (44) entre le point de fixation du manomètre (38) et la section de soutien (58) et qui débouche, au niveau de la section de soutien (58), dans une section (53) du logement de soutien (54) qui est reliée à une section de canal intérieure (43b) du canal de capture (43) conduisant à des moyens de régulation de pression (18) et est fermée hermétiquement vis-à-vis de l'environnement.

9. Appareil selon l'une des revendications 1 à 8, **caractérisé en ce que** des moyens d'encliquetage (67, 68) sont prévus pour fixer par encliquetage le support de manomètre (44) par rapport au boîtier de régulateur (37) dans la position d'affichage respective.

10. Appareil selon la revendication 9 en liaison avec l'une des revendications 5 à 8, **caractérisé en ce que** la section de montage (58) présente sur la circonférence extérieure une couronne dentée (67) dans laquelle s'engage un élément d'encliquetage (68) à ressort fixé sur le boîtier de régulateur (37).

11. Appareil selon la revendication 10, **caractérisé en ce que** la couronne dentée (67) est placée sur le prolongement de soutien (62) associé au corps de fermeture (65), l'élément d'encliquetage (68) étant prévu sur le corps de fermeture (65).

12. Appareil selon l'une des revendications 1 à 11, **caractérisé en ce que** le manomètre (38) est fixé sur le support de manomètre (44) dans le cadre d'une liaison par fiche verrouillée de façon amovible.

13. Appareil selon l'une des revendications 1 à 11, **caractérisé par** plusieurs régulateurs de pression (17) placés côté à côte les uns derrière les autres dans une direction de succession (16), la direction de succession (16) étant parallèle aux axes de rotation (46) des supports de manomètre (44).

14. Appareil selon la revendication 13, **caractérisé par** une réalisation en appareil à vanne, qui présente une plaque de base (3) réalisée d'un seul tenant ou modulaire, qui équipée de plusieurs vannes (2) à voies multiples placées successivement dans la direction de succession (16), une plaque intermédiaire (7) avec des canaux de fluide (13, 14) étant placée entre au moins une vanne (2) à voies multiples et la plaque de base (3), plaque intermédiaire sur laquelle un régulateur de pression (17) est placé sur au moins une face frontale.

15. Appareil selon la revendication 13 ou 14, **caractérisé en ce que**, pour des régulateurs de pression (17) voisins, les supports de manomètre (44) sont de longueur différentes et les manomètre (18) y sont placés avec une distance différente par rapport à l'axe de rotation (46), de telle manière que les supports de manomètre (44) peuvent pivoter l'un devant l'autre sans collision des manomètre (38) portés par eux.

16. Appareil selon l'une des revendications 13 à 15, **caractérisé en ce que** les supports de manomètre (44) de régulateurs de pression (17) immédiatement voisins peuvent prendre des positions d'affichage différentes sans se gêner mutuellement.

17. Appareil selon la revendication 16, **caractérisé en ce que** des supports de manomètre (44) se suivant dans la direction de succession (16) sont orientés en alternance avec les surfaces d'affichage (42) de leurs manomètres (38) tournées dans la direction de l'axe longitudinal (33) et dans une direction formant un angle aigu par rapport à celui-ci.

18. Appareil selon la revendication 16, **caractérisé en ce que** des supports de manomètre (44) se suivant dans la direction de succession (16) sont orientés en alternance avec les surfaces d'affichage (42) de leurs manomètres (38) tournées dans la direction de l'axe de hauteur (35) et dans une direction formant un angle aigu par rapport à celui-ci.
